# EUROPEAN PATENT APPLICATION

(11) **EP 3 922 943 A1**
(43) Date of publication of application: **15.12.2021**
(21) Application number: 20382497.4
(22) Date of filing: 09.06.2020
(51) Int. Cl.: G01C 11/00, G01C 25/00, G01B 11/03, G06T 7/80, G01B 21/04, H04N 13/246, G01B 11/00

(54) **METHOD FOR CALIBRATING A MULTI-CAMERA SYSTEM AND MULTI-CAMERA SYSTEM**

(71) Applicant: Ideko, S.Coop., 20870 Elgoibar Guipuzcoa (ES)
(72) Inventor: MENDIKUTE GARATE, Alberto, 20870 ELGOIBAR (GIPUZKOA) (ES); LEIZEA ALONSO, Ibai, 20870 ELGOIBAR (GIPUZKOA) (ES); AGUINAGA HOYOS, Iker, 20018 GIPUZKOA (ES)
(74) Representative: Plasseraud IP

(57) **Abstract**

The invention relates to a method for calibrating a multi-camera system for the photogrammetric measurement of an object (X) available in a measurement scenario (MS) using a plurality of cameras (C1, C2, C3; Ci) for viewing the measurement scenario, comprising:
• using at least one of the cameras provided with a plurality of positioning elements (P1, P2, P3, P4, P5; Ps) fixed with respect to said camera,
• arranging said camera in a calibration scenario (CS),
• arranging said camera in the measurement scenario,
• deriving a transformation function (T) between positions of the positioning elements measured in the calibration scenario and in the measurement scenario,
• applying the transformation function in order to obtain the calibration of said camera in the measurement scenario.

## Description

### Technical field

The present invention refers to the field of vision metrology, proposing a process for calibrating a multi-camera measurement system for photogrammetric measurement with which high precision can be achieved, on the order of 0.01 mm in one cubic metre of volume, in the measurements made by the cameras.

### State of the art

In the industrial sector, contactless measurement systems with which the real position and orientation of an object in the space can be determined have become increasingly important in recent years.

To this end, laser trackers are known, which are measurement systems with a high level of precision, close to 0.01 mm, and with which large objects can be measured due to the high working range thereof. However, they are systems with a high economic cost and, furthermore, since interferometry is the measurement principle, the distances measured are relative, so if the beam of the laser tracker is interrupted, the measurement process must be restarted.

Among the alternatives to laser trackers, there are optical CMMs, also known as vision trackers. This is currently the most widely used technology in the field of vision metrology and is based on equipment which integrates two or three pre-calibrated cameras with control software that collects the position of multiple markers placed on a part, being able to recognise and process the position thereof.

Multi-camera systems are an alternative solution to laser and vision trackers with adequate precision and low cost. These systems consist of cameras strategically placed in a measurement scenario wherein the object to be measured is located, and software which uses photogrammetry as a measurement principle in order to process the images captured by the cameras and determine the orientation and position of the measured object.

These systems also stand out due to the flexibility and customisation thereof, which makes it possible to have an indefinite number of cameras located in the manner that best suits each application. However, the industrial implementations of these systems are currently limited.

Moreover, since they are photogrammetry-based systems, the precision thereof is lower than that of laser and vision trackers. The precision of the measurement system depends on several factors, such as the quality of the reference markers used, the image processing techniques used, or the calculation methods chosen for the resolution thereof; however, it has been found that the calibration process of the cameras is essential for improving precision.

The calibration process essentially consists of estimating both the position and orientation of the camera in the measurement scenario, as well as the intrinsic features thereof, such as focal length, distortion factors and central points of the image plane.

The most used calibration process currently consists of strongly fixing at least three cameras in the measurement scenario, such that the fixing guarantees the immobilisation of the cameras, and then arranging in the measurement scenario a calibration element with several references, which is observed at the same time by all the cameras, such that each camera observes a portion of the calibration element. According to this, a calibration process is carried out in a single step, wherein with at least three photographs, one for each camera, a self-calibration process is performed between the cameras, thus determining at that time the position and orientation of each camera in the measurement scenario, as well as the intrinsic features thereof.

This method only enables accuracies to be obtained on the order of 0.1 mm, which is a problem in applications wherein the measurement scenario is large and/or the object to be measured is far away from the cameras, since the error in the measurement increases with the distance the object is from the camera. To improve precision, it would be necessary to have a calibration element with many references, but this would considerably increase the processing time of the data. Furthermore, in large measurement scenarios, several cameras must be used to cover the scenario, with which the calibration could be technically unfeasible.

Moreover, existing commercial multi-camera solutions have the drawback of the limited scalability thereof, resulting in the loss of precision. This is mainly due to the calibration processes, since as the working area increases, the use of larger, high-precision calibration systems is required, which implies higher cost and lower profitability.

Therefore, an alternative calibration method is necessary for photogrammetry-based multi-camera systems with which the measurement precision of the cameras, as well as the scalability limitation can be improved.

### Object of the invention

The invention proposes a method for calibrating a multi-camera system for the photogrammetric measurement of an object available in a measurement scenario using a plurality of cameras for viewing the measurement scenario, wherein, unlike the calibration processes of the state of the art wherein a self-calibration of the cameras is performed in a single phase, the proposed method for calibrating the cameras is divided into two phases, thereby improving the precision in the measurements made, making it possible to obtain precisions below 0.1 mm and up to 0.01 mm in one cubic metre of volume.

The proposed calibration method comprises:
- using at least one of the cameras provided with a plurality of positioning elements fixed with respect to said camera,
- arranging said camera in a calibration scenario, wherein
   ∘ said camera is calibrated by means of photogrammetric measurement of the positions of a plurality of calibration elements with respect to a fixed reference system of the calibration scenario,
   ∘ the position of the positioning elements is measured with respect to the fixed reference system of the calibration scenario,
   • arranging said camera in the measurement scenario, wherein
      ∘ the position of the positioning elements is measured with respect to a fixed reference system of the measurement scenario,
   • deriving a transformation function between said positions of the positioning elements measured in the calibration scenario and in the measurement scenario,
   • applying the transformation function to the positions of the plurality of calibration elements measured in order to obtain the calibration of said camera in the measurement scenario.

According to this, the proposed calibration method enables the precision to be considerably increased in the measurements taken by the cameras, since it enables the calibration of each camera to be optimised in a calibration scenario, for example, with larger dimensions, and propagating said calibration to the measurement scenario, by means of the measurement of the position of the positioning elements, this measurement which in turn can be obtained with high precision, for example, by means of a laser tracker or other coordinate measurement means.

Another object of the present invention is the multi-camera system for the photogrammetric measurement of the object available in the measurement scenario, configured to perform a method as previously described. The multi-camera system comprises at least one camera for viewing the measurement scenario provided with a plurality of positioning elements fixed with respect to said camera.

### Description of the figures

To complete the description and facilitate a better understanding of the invention, the attached figures are provided. These figures make up part of the description and illustrate an exemplary embodiment of the invention.

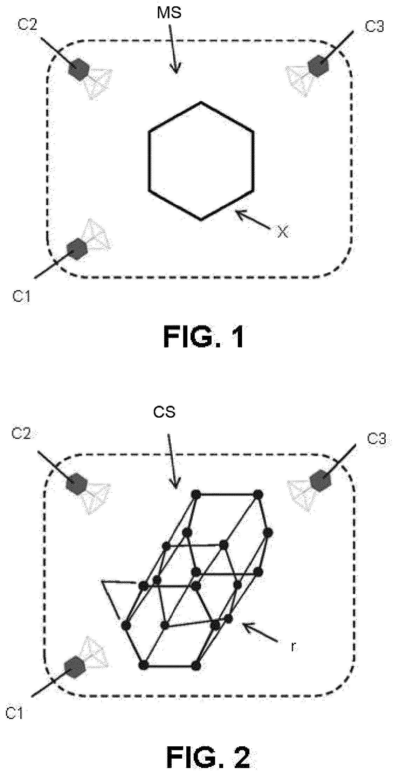

Figure 1 shows a multi-camera system for photogrammetric measurement comprising at least three cameras (C1, C2, C3) arranged for viewing a measurement scenario (MS) wherein an object (X) to be measured is available.
Figure 2 shows the three cameras (C1, C2, C3) of the multi-camera system arranged in a calibration scenario (CS), wherein the calibration of each camera (C1, C2, C3) is made possible by means of photogrammetric measurement of the calibration elements (r).

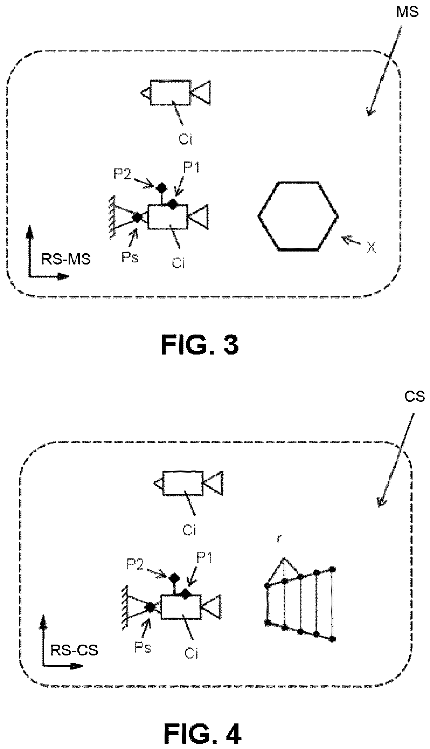

Figure 3 shows a camera (Ci) which is arranged in the measurement scenario (MS), provided with positioning elements (P1, P2, Ps), the position of which is measured with respect to the fixed reference system (RS-MS) of the measurement scenario (MS). A positioning element (Ps) is arranged in a fixing element of the camera (Ci) in the measurement scenario (MS).
Figure 4 shows the camera (Ci) which is arranged in the calibration scenario (CS), provided with positioning elements (P1, P2, Ps), the position of which is measured with respect to the fixed reference system (RS-CS) of the calibration scenario (CS). A positioning element (Ps) is arranged in a fixing element of the camera (Ci) in the calibration scenario (CS).

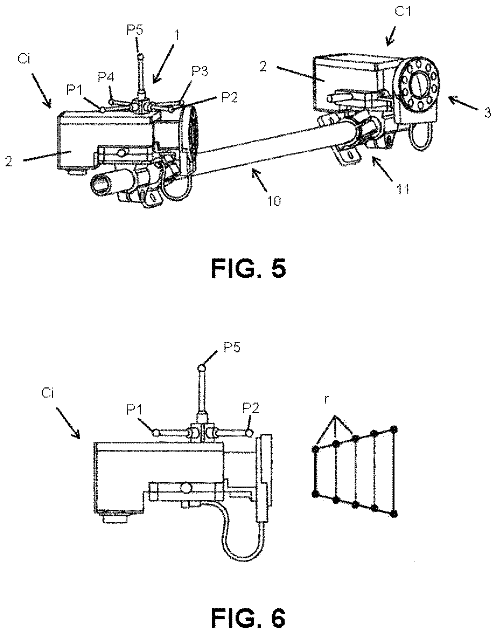

Figure 5 shows a perspective view of a multi-camera system formed by two cameras (C1, Ci), wherein the camera (Ci) incorporates a reference support (1) for the positioning elements (P1, P2, P3, P4, P5).
Figure 6 shows a side view of the camera (Ci) arranged for the calibration thereof with respect to the calibration elements (r) in the calibration scenario (CS).

### Detailed description of the invention

Conventionally, the calibration process used for calibrating this system requires the cameras (C1, C2, C3; Ci) to be fixed in the measurement scenario (MS), and then arranging in the measurement scenario (MS) a plurality of calibration elements (r) that can be observed by all the cameras (C1, C2, C3; Ci), wherein each of the cameras (C) views a part of said calibration elements (r).

With this arrangement, each of the cameras (C1, C2, C3; Ci) takes a 2D photograph of the calibration element, and only with the information obtained from the three photographs is a process for self-calibrating the cameras (C1, C2, C3; Ci) performed, the position and orientation of each camera (C1, C2, C3; Ci) in the measurement scenario (MS), as well as the intrinsic features thereof being determined.

With this self-calibration method, accuracies on the order of 0.1 mm can be obtained, while with the calibration method of the invention that will be described hereinafter, accuracies below 0.1 mm and up to 0.01 mm in a cubic metre of volume can be obtained.

The calibration elements (r) can be observed by the respective camera (C1, C2, C3; Ci). These calibration elements (r) can take the form of, for example, markers, i.e., elements with a dark colour highlighted on a light background. For example, flat sticker markers or spherical markers can be used, which enable the centre of the marker to be determined more precisely than those of the sticker. Additionally, the markers can be self-reflective in order to improve precision.

The calibration process is divided into two main scenarios: a calibration of the camera (C1, C2, C3; Ci) itself (calibration scenario), as a measurement instrument, and an application calibration (measurement scenario). Each of these scenarios (MS), (CS) is in turn made up of two phases.

In a first phase, in the calibration scenario (CS) of the camera (C1, C2, C3; Ci), the camera (C1, C2, C3; Ci) is calibrated by means of photogrammetric measurement of the positions of a plurality of calibration elements (r) with respect to a fixed reference system of the calibration scenario (RS-CS),

The calibration elements (r) are arranged in the calibration scenario (CS) and are fixed with respect to it. The calibration elements (r) can be distributed following a pattern. This pattern can be optimised in order to obtain higher calibration precision, for example, following the methodology described in "Self-calibration technique for on-machine spindle-mounted vision systems", Measurement, pp. 71-81, 2017, by A. Mendikute, I. Leizea, J. A. Yagüe-Fabra, M. Zatarain.

A second phase consists of determining the spatial position of each positioning element (P1, P2, P3, P4, P5; Ps), corresponding to a reference point in the space. Preferably, this process can be performed by using coordinate measuring means, CMM, guaranteeing maximum precision, as described, for example, in "Self-calibration technique for on-machine spindle-mounted vision systems", Measurement, pp. 71-81, 2017, by A. Mendikute, I. Leizea, J. A. Yagüe-Fabra, M. Zatarain, or in "Six-axis position measurement system for levitated motion stages", CIRP Annals, Vol. 62(1), 2013, pp. 507-510, by X. Lu, N. Rao, I. Usman. However, according to the invention, the use of any other measurement method is not ruled out.

Both the positions of the positioning elements (P1, P2, P3, P4, P5; Ps) or reference points as the positions of the plurality of calibration elements (r) obtained by means of photogrammetric measurement of the camera (C1, C2, C3; Ci) (extrinsic parameters) relate to the same reference system (or coordinate system) of the calibration scenario (RS-CS).

In the calibration scenario (CS) of the camera (C1, C2, C3; Ci), in addition to the calibration of the extrinsic parameters of the camera (C1, C2, C3; Ci), the calibration of the intrinsic parameters of the camera (C1, C2, C3; Ci) can be carried out. It is envisaged that each camera (C1, C2, C3; Ci) is calibrated independently with respect to one same or different calibration scenario (CS).

Moreover, in the measurement scenario (MS), a process analogous to that of the second phase of the calibration scenario (CS) of the camera (C1, C2, C3; Ci) is executed. Thus, the set of positions in the space of each positioning element (P1, P2, P3, P4, P5; Ps) or reference point of the camera (C1, C2, C3; Ci) is obtained, but with the camera (C1, C2, C3; Ci) arranged for the measurement application. In other words, it relates to a reference system (or coordinate system) of the measurement scenario (RS-MS), in principle different from the reference system of the calibration scenario (RS-CS).

In this manner, from the two known sets of reference points and the extrinsic parameters obtained for the calibration scenario (CS), the extrinsic parameters for the measurement scenario (MS) are obtained.

The positions of the positioning elements (P1, P2, P3, P4, P5; Ps) in the respective reference systems of the calibration scenario (CS) and the measurement scenario (MS) are selected in order to obtain a transformation function (T) corresponding to both scenarios (CS), (MS). The transformation function may comprise a coordinate transformation matrix between the two reference systems (RS-CS), (RS-MS).

The transformation function (T) can be calculated, for example, by means of a best-fit mapping function, for example, using least squares. An example of a calculation algorithm is described in "Closed-form solution of absolute orientation using unit quaternions", JOSA A, vol. 4, no. 4, pp. 629-642, 1987, by B. K. Horn.

The last calibration phase in the measurement scenario (MS) and, consequently, the last step for calibrating the multi-camera system, focusses on applying the transformation function (T) obtained in order to propagate the extrinsic parameters of the calibration scenario (CS) to the measurement scenario (MS).

In a preferred embodiment, the calibration scenario (CS) is external to the measurement scenario (MS). By taking the cameras (C1, C2, C3; Ci) out of the measurement scenario (MS), it becomes possible to have an optimised distribution of the calibration elements (r), in particular, not subject to the particular visibility and accessibility restrictions that each camera (C1, C2, C3; Ci) could have in the measurement scenario (MS). Likewise, it is possible to use calibration scenarios (CS) with larger dimensions or adapted in order to achieve greater precision in the calibration.

According to an embodiment of the invention, the multi-camera system is conceived for a stereo-photogrammetric application. This application is made up of two commercially available cameras (C1, C2, C3; Ci), for example, Teledyne DASA Genie Nano 4020, 12.4MP, 16 mm, individually calibrated in the calibration scenario (CS) for the camera (C1, C2, C3; Ci).

According to the invention, also envisaged is the use of the support structure (10) to which the cameras (C1, C2, C3; Ci) can be assembled and disassembled, in the measurement scenario (MS) or in the calibration scenario (CS), i.e., the cameras (C1, C2, C3; Ci) being removable from the support structure (10). In particular, it is envisaged that the cameras (C1, C2, C3; Ci) can be fixed to the support structure (10) in different positions of the support structure (10) by means of fixing elements (11), for example, by means of flanges. The support structure 10 can be, for example, a profile structure, as shown in the figures. In this sense, it is also conceived that a removable element or fixing point of the camera (C1, C2, C3; Ci) to the support structure (10) can be selected as a positioning element (P1, P2, P3, P4, P5; Ps) of the camera (C1, C2, C3; Ci).

The support structure (10) enables the previously calibrated cameras (C1, C2, C3; Ci) to be connected to and disconnected from it, for the function that is necessary (maintenance, replacement of the camera, etc.) without needing to perform a new calibration each time a camera (C1, C2, C3; Ci) is fixed again.

In both scenarios (CS), (MS), the images are preferably taken from reflective non-coded targets. The material properties of these elements enable the detection quality of the image to be the same in both industrial and laboratory settings. This is also made possible by means of active LED lighting means (3) that each camera (C1, C2, C3; Ci) can incorporate.

In an embodiment according to the invention, the positioning elements (P1, P2, P3, P4, P5; Ps) are arranged at respective ends of reference cylinders, which can be orthogonal to each other, of a reference support (1) fixed to said camera (C1, C2, C3; Ci), i.e., together with said camera (C1, C2, C3; Ci).

The positioning elements (P1, P2, P3, P4, P5; Ps) can be formed by any element which enables the measurement of the position thereof. The positioning elements (P1, P2, P3, P4, P5; Ps) can be, for example, tactile elements, such that the position thereof is obtained by probing said positioning element. Likewise, the shape of the positioning elements (P1, P2, P3, P4, P5; Ps) can be any shape, for example, spheres or cones. Advantageously, the positioning elements (P1, P2, P3, P4, P5; Ps) must be traceable, i.e., they enable the measurement of the position thereof in the same way or in a repetitive manner, in the calibration scenario (CS) and in the measurement scenario (MS).

According to the invention, it is also contemplated that a group of positioning elements (P1, P2, P3, P4, P5; Ps) can form a single integrating element of such positioning elements (P1, P2, P3, P4, P5; Ps) such as, for example, the reference support (1). Likewise, it is envisaged that this integrating element can be fixed interchangeably or in a repetitive manner between different cameras (C1, C2, C3; Ci).

The figures show a reference support (1) made up of five tactile positioning elements (P1, P2, P3, P4, P5; Ps) (by Zeiss^{©}). In general, the number of positioning elements (P1, P2, P3, P4, P5; Ps) can be variable, the more positioning elements (P1, P2, P3, P4, P5; Ps) there are, the greater the calibration precision that can be obtained for each camera (C1, C2, C3; Ci) according to the invention. Preferably, three or more positioning elements (P1, P2, P3, P4, P5; Ps) per camera (C1, C2, C3; Ci), and more preferably five, are envisaged, in particular arranged in cylinders or shafts orthogonal to each other of a reference support (1).

The camera (C1, C2, C3; Ci) has a housing (2) manufactured for industrial settings, enabling the effects on the measurement caused by the temperature, moisture or vibrations to be mitigated in a more efficient manner.

The positioning elements (P1, P2, P3, P4, P5; Ps) provide means in common between the two reference systems (RS-CS), (RS-MS), of the calibration scenario (CS) and of the measurement scenario (MS), making it possible to derive the corresponding transformation function (T).

At the end of the process, each camera (C1, C2, C3; Ci) is calibrated at the level of intrinsic and extrinsic parameters for the application thereof in the measurement scenario (MS).

## Claims

1. A method for calibrating a multi-camera system for the photogrammetric measurement of an object (X) available in a measurement scenario (MS) using a plurality of cameras (C1, C2, C3; Ci) for viewing the measurement scenario (MS), comprising:
• using at least one of the cameras (C1, C2, C3; Ci) provided with a plurality of positioning elements (P1, P2, P3, P4, P5; Ps) fixed with respect to said camera (C1, C2, C3; Ci),
• arranging said camera (C1, C2, C3; Ci) in a calibration scenario (CS), wherein
∘ said camera (C1, C2, C3; Ci) is calibrated by means of photogrammetric measurement of the positions of a plurality of calibration elements (r) with respect to a fixed reference system of the calibration scenario (RS-CS),
∘ the position of the positioning elements (P1, P2, P3, P4, P5; Ps) is measured with respect to the fixed reference system of the calibration scenario (RS-CS),
• arranging said camera (C1, C2, C3; Ci) in the measurement scenario (MS), wherein
∘ the position of the positioning elements (P1, P2, P3, P4, P5; Ps) is measured with respect to a fixed reference system of the measurement scenario (RS-MS),
• deriving a transformation function (T) between said positions of the positioning elements (P1, P2, P3, P4, P5; Ps) measured in the calibration scenario (CS) and in the measurement scenario (MS),
• applying the transformation function (T) to the positions of the plurality of calibration elements (r) measured in order to obtain the calibration of said camera (C1, C2, C3; Ci) in the measurement scenario (MS).

2. The calibration method, according to claim 1, **characterised in that** the measurement of the positioning elements (P1, P2, P3, P4, P5; Ps) is performed by means of coordinate measuring means, CMM, in particular by means of a laser tracker.

3. The calibration method, according to one of claims 1 or 2, **characterised in that** the calibration scenario (CS) is external to the measurement scenario (MS).

4. A multi-camera system for the photogrammetric measurement of an object (X) available in a measurement scenario (MS), configured to perform a method according to one of the preceding claims, comprising at least one camera (C1, C2, C3; Ci) for viewing the measurement scenario (MS) provided with a plurality of positioning elements (P1, P2, P3, P4, P5; Ps) fixed with respect to said camera (C1, C2, C3; Ci).

5. The calibration system, according to claim 4, **characterised in that** the number of positioning elements (P1, P2, P3, P4, P5; Ps) of said camera (C1, C2, C3; Ci) is greater than or equal to three, preferably equal to five.

6. The calibration system, according to one of claims 4 or 5, **characterised in that** the positioning elements (P1, P2, P3, P4, P5; Ps) are arranged at respective ends of orthogonal reference cylinders of a reference support (1) fixed to said camera (C1, C2, C3; Ci).
